# FASCICULE DE BREVET EUROPEEN

(11) **EP 2 939 050 B1**
(45) Date de publication et mention de la délivrance du brevet: **10.04.2019**
(21) Numéro de dépôt: 13814936.4
(22) Date de dépôt: 20.12.2013
(51) Int. Cl.: G01S 17/58, G01P 5/26, G01P 13/02, G01S 17/88, G01S 17/95

(54) **PROCEDE DE DETERMINATION DE LA VITESSE PAR RAPPORT A L'AIR ENVIRONNANT D'UN AERONEF A VOILURE TOURNANTE**
VERFAHREN ZUR BESTIMMUNG DER GESCHWINDIGKEIT EINES DREHFLÜGLERS IN BEZUG ZUR UMGEBUNGSLUFT
METHOD FOR DETERMINING THE SPEED OF A ROTOCRAFT RELATIVE TO THE SURROUNDING AIR

(30) Priorité: 28.12.2012 FR 1203618
(43) Date de publication de la demande: 04.11.2015
(73) Titulaire: THALES, 92400 Courbevoie (FR)
(72) Inventeur: RONDEAU, Philippe, F-26400 Allex (FR); SCHLOTTERBECK, Jean-Pierre, F-26300 Rochefort-Samson (FR); LACONDEMINE, Xavier, F-26000 Valence (FR)
(74) Mandataire: Brunelli, Gérald
(86) Numéro de dépôt international: PCT/EP2013/077620
(87) Numéro de publication internationale: WO 2014/102175

(56) Documents cités:
- US-A- 4 735 503
- US-A1- 2003 043 058
- US-A1- 2010 128 252
- US-A1- 2011 043 786
- US-A1- 2012 089 362
- US-A1- 2012 212 369

## Description

La présente invention porte sur un procédé de détermination de la vitesse par rapport à l'air environnant d'un aéronef à voilure tournante, et un dispositif associé.

Les systèmes anémométriques pour aéronefs à voilure tournante, tels les hélicoptères, sont généralement identiques à ceux des avions, donc basés sur des mesures de pression totale, par exemple par sondes à tubes de Pitot, et de pression statique.

De tels systèmes sont pourtant mal adaptés à des aéronefs à voilure tournante, car ils deviennent inopérants lors de manoeuvres à basse vitesse, en particulier lorsque l'aéronef est sensiblement en vol stationnaire, en vol latéral ou en vol arrière, ce qui contraint à piloter à vue.

En outre, la méconnaissance du vent local lors de décollage sur une zone non équipée d'un anémomètre peut conduire, pour des raisons de sécurité, à limiter l'emport de charge utile.

Différentes méthodes ont été proposées, dès les années 1970, pour tenter d'accéder à la vitesse air, i.e. la vitesse de l'aéronef par rapport à l'air environnant, lorsque les moyens conventionnels sont inopérants, que ce soit par le biais de mesure de pression ou de girouettes placées à proximité du rotor, ou indirectement en combinant différents paramètres internes.

Ces méthodes alternatives demeurent complexes et leur usage s'est essentiellement limité aux essais en vol ou à des porteurs militaires de haute performance.

Le document FR 2761162 divulgue la mesure de la vitesse d'un hélicoptère par rapport à l'air environnant par un dispositif LiDAR Doppler. Ce dispositif repose sur la mesure du décalage de fréquences, par effet Doppler, entre un faisceau laser émis dans l'atmosphère et le faisceau rétrodiffusé par les particules naturellement présentes dans le volume d'air sondé. Cette fréquence Doppler est directement proportionnelle à la projection, selon l'axe de visée, de la vitesse relative du porteur par rapport à la masse d'air. L'anémométrie laser permet ainsi d'accéder à une mesure de vitesse à distance, en dehors du flux perturbé par le rotor. Pour obtenir les trois composantes du vecteur vitesse air, on utilise classiquement soit au moins trois faisceaux laser fixes soit un dispositif de balayage de faisceau permettant de sonder l'atmosphère selon les trois dimensions. Un prisme tournant permet par exemple de balayer un cône de faible angle au sommet. Toutefois, dans certaines conditions d'emploi de l'hélicoptère, notamment en cas de manoeuvre à proximité d'obstacles (par exemple bâtiment ou paroi rocheuse), on peut redouter dans tout ou partie des axes de visée, la présence d'échos parasites susceptibles de conduire à une indisponibilité voire à une dégradation non signalée de la précision de mesure de vitesse.

Le document FR 2891409 porte sur un dispositif d'anémométrie laser à sécurité oculaire améliorée utilisant un cône de balayage mais ne prévoyant aucun traitement capable de traiter ce risque d'indisponibilité voire de perte d'intégrité de la mesure de vitesse air.

Un but de l'invention est de remédier aux problèmes précités, et notamment de fournir un procédé et un système permettant, notamment lors de manoeuvres à basses vitesses, de fournir une vitesse correcte de déplacement par rapport à l'air environnant, d'un aéronef à voilure tournante, et ce malgré la présence dans la scène de mesure d'éléments susceptibles de générer des échos perturbateurs.

Un but de l'invention est de permettre au pilote d'un aéronef à voilure tournante d'avoir à disposition une vitesse air correcte même à basse vitesse, lui évitant ainsi de piloter uniquement à vue, et augmentant la sécurité des passagers de l'aéronef.

Un but de l'invention est également de permettre l'élaboration d'une vitesse du vent précise et intègre lorsque l'hélicoptère est au sol, avec le rotor arrêté ou tournant. Cette information est essentielle lors du décollage depuis une zone non équipée d'un anémomètre, la connaissance précise du vent local permettant d'optimiser l'emport de charge utile tout en préservant la sécurité du vol.

Il est proposé, selon un aspect de l'invention, un procédé de détermination du vecteur vitesse par rapport à l'air environnant, d'un aéronef à voilure tournante équipé d'un dispositif d'anémométrie laser Doppler à balayage du faisceau selon la revendication 1.

Un tel procédé permet au pilote d'un aéronef à voilure tournante d'avoir à disposition une vitesse air correcte même à basse vitesse, lui évitant ainsi de piloter uniquement à vue, et augmentant la sécurité des passagers de l'aéronef.

Dans un mode de mise en oeuvre, le procédé comprend, en outre, une étape consistant à estimer une conformité des mesures valides avec ledit modèle.

Selon un mode de mise en oeuvre, ladite estimation utilise une norme de l'écart entre le vecteur constitué des mesures prises en compte et le vecteur constitué des mesures prévues correspondantes.

Par exemple, la norme peut être calculée par la somme des écarts quadratiques ou la somme des écarts absolus.

Le balayage est continu, ce qui contribue à offrir une grande redondance de mesure et à limiter la gêne procurée par la présence d'obstacles dans la scène de mesure. Le balayage continu offre en outre une meilleure fiabilité mécanique.

L'étape de mesure des projections utilise un balayage par faisceau laser selon un cône d'angle au sommet supérieur à un deuxième seuil.

Cela permet d'atteindre une meilleure précision d'estimation des trois composantes du vecteur vitesse air.

Dans un mode de réalisation, le deuxième seuil dépend de paramètres de fonctionnement de l'aéronef à voilure tournante, lesdits paramètres comprenant l'envergure de la voilure et/ou des attitudes limites de l'aéronef à voilure tournante.

Ainsi, on limite les masquages du faisceau ou dégradations du signal LiDAR dus aux structures de l'hélicoptère, aux pales du rotor ou au sol.

Selon un mode de réalisation, l'étape de mesure des projections utilise un balayage de faisceau laser selon un cône d'axe sensiblement vertical lorsque l'aéronef est posé au sol.

Cela permet un sondage de l'atmosphère tout autour du porteur et une estimation précise de la vitesse air malgré la présence d'obstacles (échos parasites) selon certains axes de visée (ou directions de mesure).

Selon un mode de mise en oeuvre, le deuxième seuil est supérieur ou égal à 60°, et peut, de manière particulièrement intéressante, valoir sensiblement 109,4°.

La valeur de 109,4° correspond à un cône tangent aux arêtes d'un coin de cube.

La précision de mesure est alors indépendante de la direction du vecteur vitesse.

Dans un mode de mise en oeuvre, ladite étape de détection d'anomalie (Etape2) comprend les sous-étapes consistant à :
- effectuer une analyse spectrale sur chaque direction de mesure; et
- déterminer, à partir de l'analyse spectrale, les raies spectrales correspondant respectivement au signal utile et au signal parasite pour chaque direction de mesure .

Ainsi, il est possible d'améliorer la précision de mesure de vitesse en présence, dans la scène de mesure, d'éléments susceptibles de générer des échos LiDAR parasites.

Il est également proposé, selon un autre aspect de l'invention, un dispositif d'anémométrie laser Doppler à balayage à 360° selon un cône d'angle au sommet supérieur à un seuil, adapté pour mettre en oeuvre le procédé tel que décrit précédemment.

Dans un mode de réalisation, le dispositif comprend un hublot en forme de dôme centré sur le sommet du cône de balayage.

Un hublot sphérique ainsi centré sur le sommet du cône de balayage permet de réaliser l'étanchéité du système vis à vis de l'extérieur tout en assurant la transmission du faisceau optique sans introduire d'aberrations optiques autres qu'à symétrie de révolution facilitant la réalisation du système de mise en forme du faisceau.

Selon un mode de réalisation, le dispositif comprend un premier prisme tournant comprenant une face agissant en réflexion interne totale.

L'utilisation de ce prisme est équivalent, d'un point de vue de la fonction optique, à l'utilisation d'un miroir mais permet d'augmenter la rigidité du système, limitant ainsi les risques de désalignement des optiques. Pour des cônes de balayage faiblement ouverts (d'angle au sommet SA < 70°), il est possible de réaliser la déflexion du faisceau à l'aide d'un prisme en transmission ou d'un autre dispositif de déflexion.

Dans un mode de réalisation, le dispositif comprend un premier contre-prisme d'équilibrage du premier prisme tournant par rapport à son axe de rotation.

Ainsi, les vibrations induites par la rotation du dispositif de balayage sont limitées.

Selon un mode de réalisation, le dispositif comprend un deuxième prisme tournant disposé en amont du premier prisme tournant, en considérant le sens d'émission du signal optique laser.

Il est également proposé, selon un autre aspect de l'invention, un aéronef muni d'un dispositif tel que mentionné ci-dessus, adapté pour être monté de sorte que le cône est d'axe sensiblement vertical lorsque l'aéronef est posé au sol.

Ainsi, il est possible de sonder l'atmosphère tout autour de l'hélicoptère pour offrir une redondance de mesures maximale.

L'invention sera mieux comprise à l'étude de quelques modes de réalisation décrits à titre d'exemples nullement limitatifs et illustrés par les dessins annexés sur lesquels :
- la figure 1 illustre un hélicoptère équipé d'un dispositif d'anémométrie laser Doppler à balayage à 360°, selon un aspect de l'invention ;
- les figures 2 et 3 illustrent schématiquement deux dispositif d'anémométrie laser Doppler à balayage conique, selon des aspects de l'invention ; et

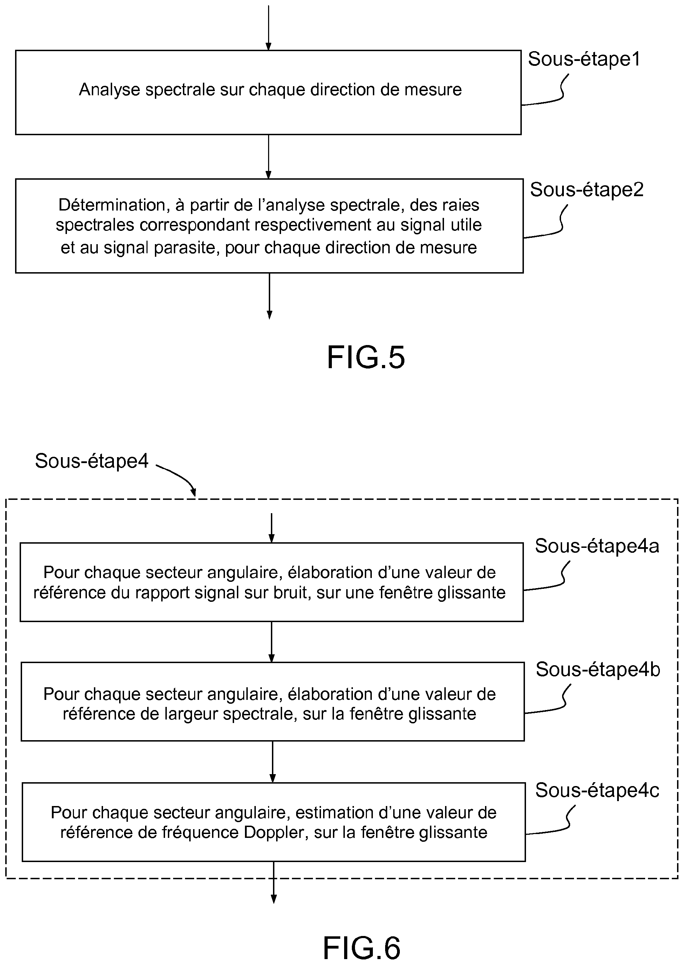

- les figures 4 et 5 illustrent schématiquement un procédé de détermination du vecteur vitesse par rapport à l'air environnant, d'un aéronef à voilure tournante équipé d'un dispositif d'anémométrie laser Doppler à balayage pour mesurer un vecteur vitesse de l'aéronef par rapport à l'air environnant, selon un aspect de l'invention.

Sur l'ensemble de figures, les éléments ayants les mêmes références sont similaires.

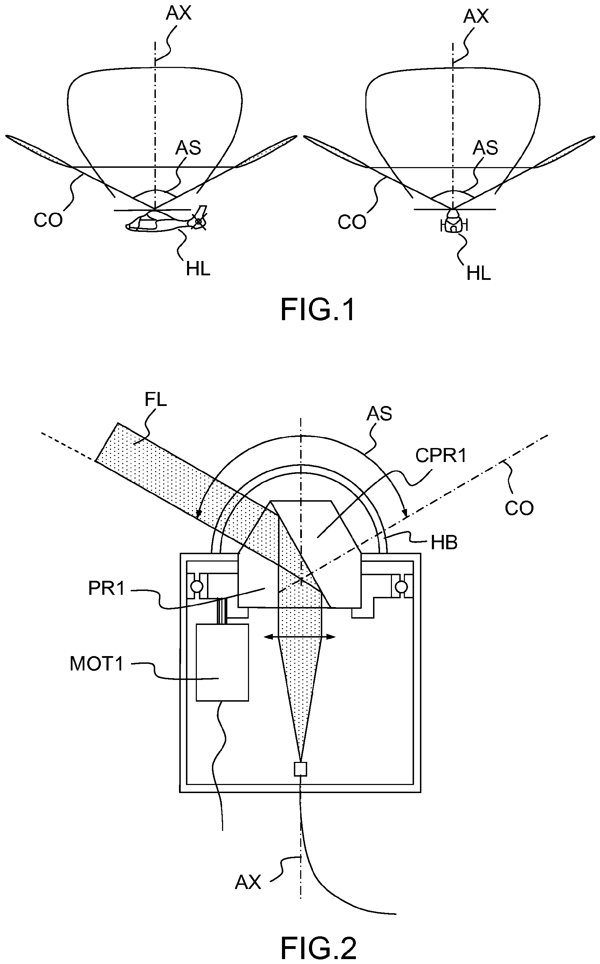

La présente invention porte sur un procédé de détermination du vecteur vitesse *̅V̅d̅*̅, par rapport à l'air environnant, d'un aéronef à voilure tournante, en l'occurrence, comme illustré sur la figure 1, en vues de face et de profil, un hélicoptère HL, équipé d'un dispositif d'anémométrie laser Doppler à balayage, pour mesurer un ensemble de projections *Vm* du vecteur vitesse *̅V̅d̅*̅ sur au moins quatre directions non coplanaires.

Dans la suite de la description on mentionne l'hélicoptère HL comme exemple d'aéronef à voilure tournante, mais l'invention s'applique à tout autre type d'aéronef à voilure tournante.

La figure 1 représente une vue de face et une vue de profil de l'hélicoptère HL.

Le balayage selon un cône d'axe proche de la verticale permet d'avoir un balayage en azimut de 360° d'azimut et ce réduire considérablement le risque de discontinuité de la mesure due au masquage, ou, en d'autres termes d'apparition d'un obstacle dans la scène de mesure (par exemple poser de l'hélicoptère HL à proximité d'un bâtiment).

L'utilisation d'un scanner couvrant 360° permet de garantir la continuité de service dans toutes les conditions d'approche.

La rotation rapide (de l'ordre de 300 tours/min) nécessaire à l'atteinte de la spécification de bande passante de la mesure de vitesse (environ 5Hz) apporte de surcroit une sélectivité spatiale due au déplacement de l'axe optique pendant le temps d'aller-retour sur écho lointain (environ 200 m).

L'exigence de sélectivité spatiale permettant de s'affranchir d'un écho puissant proche (obstacle ou nuage dans la zone de mesure) est relâchée. On préfère en effet exclure un secteur angulaire gêné plutôt que de rechercher une zone intermédiaire dans laquelle l'information n'est peut être plus représentative de la masse d'air dans laquelle évolue la machine (flux thermique proche d'une paroi).

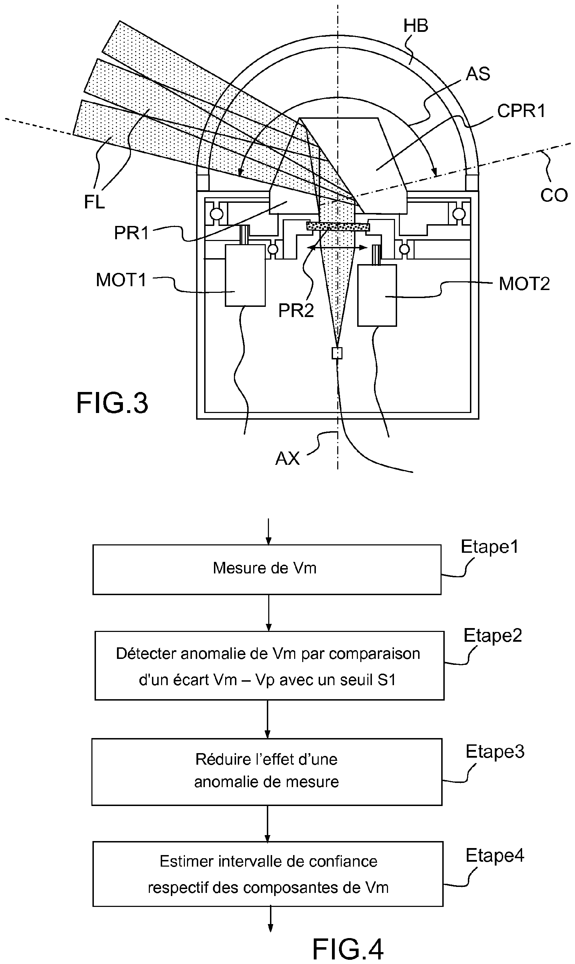

Les figures 2 et 3 représentent deux exemples de dispositifs d'anémométrie laser Doppler à balayage conique pour mesurer un vecteur vitesse de l'aéronef par rapport à l'air environnant.

La figure 2 représente schématiquement un dispositif d'anémométrie laser Doppler à balayage conique de faisceau laser FL selon un cône CO d'angle au sommet AS supérieur à un seuil, en l'espèce supérieur à 60°, et de manière particulièrement intéressante sensiblement égal à 109,4°.

Le dispositif d'anémométrie laser Doppler comprend un hublot HB en forme de dôme centré sur le sommet du cône CO de balayage, et un premier prisme tournant PR1 à face miroir en réflexion interne totale, entraîné en rotation par un premier moteur MOT1.

Le dispositif d'anémométrie laser Doppler comprend également un contre-prisme d'équilibrage CPR1 du premier prisme tournant PR1 par rapport à son axe de rotation AX.

La variante de dispositif de la figure 3 comprend, en outre, un deuxième prisme PR2 tournant disposé en amont du premier prisme tournant PR1, en considérant le sens d'émission du signal optique laser. Le deuxième prisme PR2 est entraîné en rotation par un deuxième moteur MOT2.

La figure 4 représente un procédé de détermination du vecteur vitesse *̅V̅d̅*̅ par rapport à l'air environnant, d'un aéronef à voilure tournante HL équipé d'un dispositif d'anémométrie laser Doppler à balayage pour mesurer, dans une étape Etape1 un ensemble de projections *Vm* dudit vecteur vitesse *̅V̅d̅*̅ sur au moins quatre directions non coplanaires selon un aspect de l'invention.

Le procédé comprend les étapes consistant à :
- détecter, lors d'une étape Etape2, une éventuelle anomalie d'au moins un élément de l'ensemble de projections mesurées *Vm*, à partir d'une comparaison par rapport à un premier seuil S1, d'un écart entre les mesures *Vm* et des mesures prévues *Vp* à partir d'un modèle prédéterminé dépendant de valeurs de paramètres de balayage du faisceau du dispositif d'anémométrie; et
- réduire, lors d'une étape Etape3, l'effet d'une anomalie de mesure détectée par invalidation des mesures correspondant à ladite anomalie et en calculant les composantes du vecteur vitesse à partir des mesures valides.

Le premier seuil, peut par exemple valoir deux à trois fois l'écart quadratiques moyen entres les mesures et les mesures prévues.

Le procédé peut également comprendre une étape Etape4 consistant à estimer une conformité des mesures valides *Vm* avec ledit modèle.

L'estimation peut utiliser une norme de l'écart entre le vecteur constitué des mesures *Vm* prises en compte et le vecteur constitué des mesures prévues *Vp* correspondantes. Par exemple, la norme peut être calculée par la somme des écarts quadratiques ou la somme des écarts absolus.

Le balayage peut être continu, ce qui contribue à offrir une grande redondance de mesure et à limiter la gêne procurée par la présence d'obstacles dans la scène de mesure. Un dispositif à balayage continu présente en outre une meilleure fiabilité mécanique.

L'étape de mesure Etape1 des mesures *Vm* utilise une mesure selon un cône CO d'angle au sommet AS supérieur à un deuxième seuil S2, et d'axe AX sensiblement vertical lorsque l'aéronef HL est posé au sol.

Le deuxième seuil S2 peut dépendre de paramètres de fonctionnement de l'aéronef à voilure tournante HL, lesdits paramètres comprenant l'envergure de la voilure et/ou des attitudes limites de l'aéronef à voilure tournante HL. Le deuxième seuil peut être supérieur ou égal à 60°, et peut, de manière particulièrement intéressante, valoir sensiblement 109,4°.

L'étape de détection d'anomalie Etape2 peut comprendre les sous-étapes consistant à :
- effectuer une analyse spectrale sur chaque direction de mesure (sous-étape1); et
- déterminer, à partir de l'analyse spectrale, les raies spectrales correspondant respectivement au signal utile et au signal parasite pour chaque direction de mesure (sous-étape2).

La détermination, ou distinction, parmi les raies spectrales détectées selon les directions de mesures, de celles correspondant au signal utile c'est-à-dire provenant de la rétrodiffusion du faisceau laser FL sur les particules atmosphériques, et de celles correspondant à des signaux parasites provenant par exemple de la réflexion du faisceau laser FL sur des bâtiments, des parois rocheuses, le sol, ou bien encore des signaux parasites de la chaîne d'acquisition électronique analogique.

Cette distinction entre signaux utiles et signaux parasites repose, en premier lieu, sur la comparaison des grandeurs associées aux raies spectrales (largeur spectrale, amplitude et fréquence centrale) à des valeurs de référence. Par exemple, pour des raies dont l'amplitude dépasse de 10 dB, l'amplitude des signaux utiles attendus, compte tenu des caractéristiques du LiDAR, sont considérées comme des raies parasites donc exclues de la liste des raies candidates. De façon analogue, les raies dont la largeur spectrale est anormalement faible au regard de la dispersion de vitesse escomptée dans le volume de mesure, sont considérées comme des signaux parasites donc exclues de la liste des raies candidates.

Les valeurs de référence associées à la largeur spectrale et à l'amplitude des raies peuvent être constantes ou être ré-évaluées de façon continue, en prenant en compte les mesures précédentes. Par exemple, la valeur de référence de l'amplitude d'une raie peut-être élaborée par calcul d'une valeur moyenne ou médiane sur une fenêtre d'observation glissante.

Les valeurs de référence associées aux fréquences centrales sont basées pour chaque direction de mesure sur l'estimation a priori du vecteur vitesse à l'instant courant, projetée selon l'axe de mesure considéré, cette estimation a priori pouvant être obtenue à l'aide d'un filtre de Kalman.

A l'issue de cette étape de ce traitement, l'estimation du vecteur vitesse est effectuée en prenant en compte le modèle de variation de la fréquence Doppler au cours d'un cycle de balayage du faisceau FL.

Dans le cas d'un balayage conique, le modèle de variation de la fréquence du signal recueilli au cours d'un tour est sinusoïdal et défini par trois paramètres que sont l'amplitude, la valeur moyenne et la phase de la sinusoïde.

Un algorithme de type moindre carrés permet de déterminer la valeur des trois paramètres de sorte que la sinusoïde est la plus proche des observations au sens de la minimisation de la somme des écarts quadratiques entre les mesures et le modèle. On associe alors à l'estimation des trois composantes du vecteur vitesse qui découle de ces trois paramètres, un indicateur de conformité des mesures au modèle qui peut être défini comme l'écart quadratique moyen entre les mesures et le modèle.

La démarche proposée consiste à effectuer une première estimation V1 du vecteur vitesse en ne prenant en compte que les directions de mesure pour lesquelles une seule raie spectrale est candidate, i.e. présente des caractéristiques conformes aux valeurs de référence. On évalue l'écart quadratique moyen EQM1 associé à cette estimation.

On évalue alors pour l'ensemble des directions de mesure prises en compte pour l'estimation V1, l'écart quadratique entre la vitesse mesurée selon cette direction et la projection de V1 selon cette direction. On effectue alors une deuxième estimation du vecteur vitesse V2 en excluant toutes les directions pour lesquelles cet écart dépasse significativement l'écart quadratique moyen EQM1, par exemple 3 × EQM1.

Cette évaluation peut être réitérée, c'est-à-dire que l'on peut effectuer un nouveau contrôle de l'écart quadratique entre la vitesse mesurée selon cette direction et la projection de l'estimation du deuxième vecteur vitesse V2 pouvant conduire à réévaluer le vecteur vitesse en excluant des directions de mesures supplémentaires.

S'il existe des directions de mesure selon lesquelles plusieurs raies spectrales demeurent candidates à l'issue de l'étape des comparaisons des caractéristiques des raies aux valeurs de référence, on évalue l'écart quadratique entre ces valeurs de vitesse et la projection du deuxième vecteur V2 (obtenu à l'étape précédente) selon ces axes de mesure. On réintègre alors dans le calcul du vecteur vitesse, les directions de mesure pour lesquelles l'une des raies conduit à un écart quadratique faible, par exemple inférieur à 2 × EQM2. On obtient alors une troisième estimation du vecteur vitesse V3 qui repose uniquement sur les raies spectrales dont les caractéristiques sont compatibles avec le signal utile.

Enfin, on évalue toutes les valeurs possibles du vecteur vitesse en excluant l'une des directions de mesures parmi celles prises en compte dans la troisième estimation V3. On détermine alors l'intervalle de confiance associé aux composantes du troisième vecteur vitesse V3 en calculant l'écart maximal entre les composantes respectives du troisième vecteur vitesse V3 et les composantes de ces solutions, ces écarts étant augmentés des bruits de mesure.

## Revendications

1. Procédé de détermination du vecteur vitesse (*̅V̅d̅*̅) par rapport à l'air environnant, d'un aéronef à voilure tournante (HL) équipé d'un dispositif d'anémométrie laser Doppler à balayage continu du faisceau , comprenant les étapes consistant à :
- mesurer (Etape1) un ensemble de projections *(Vm)* dudit vecteur vitesse (*̅V̅d̅*̅) sur au moins quatre directions non coplanaires en utilisant un balayage du faisceau laser selon un cône (CO) d'angle au sommet (AS) supérieur à un deuxième seuil (S2), et d'axe (AX) sensiblement vertical lorsque l'aéronef (HL) est posé au sol
- détecter (Etape2) une éventuelle anomalie d'au moins un élément de l'ensemble de projections mesurées (*Vm*), à partir d'une comparaison par rapport à un premier seuil (S1), d'un écart entre les mesures *(Vm)* et des mesures prévues (*Vp*) à partir d'un modèle prédéterminé dépendant de valeurs de paramètres de balayage du faisceau du dispositif d'anémométrie; et
- réduire (Etape3) l'effet d'une anomalie détectée par invalidation des mesures correspondant à ladite anomalie, et en calculant les composantes du vecteur vitesse à partir des mesures valides.

2. Procédé selon la revendication 1, comprenant, en outre, une étape consistant à estimer (Etape4) une conformité des mesures valides *(Vm)* avec ledit modèle.

3. Procédé selon la revendication 2, dans lequel, ladite estimation utilise une norme de l'écart entre le vecteur constitué des mesures (*Vm*) prises en compte et le vecteur constitué des mesures prévues (*Vp*) correspondantes.

4. Procédé selon la revendication 3, dans lequel, la norme peut être calculée par la somme des écarts quadratiques ou la somme des écarts absolus.

5. Procédé selon l'une des revendications précédentes, dans lequel le deuxième seuil (S2) dépend de paramètres de fonctionnement de l'aéronef à voilure tournante (HL), lesdits paramètres comprenant l'envergure de la voilure et/ou des attitudes limites de l'aéronef à voilure tournante (HL).

6. Procédé selon l'une des revendications précédentes, dans lequel le deuxième seuil (S2) est supérieur ou égal à 60°.

7. Procédé selon l'une des revendications précédentes, dans lequel le deuxième seuil (S2) vaut sensiblement 109,4°.

8. Procédé selon l'une des revendications précédentes, dans lequel ladite étape de détection d'anomalie (Etape2) comprend les sous-étapes consistant à :
- effectuer une analyse spectrale sur chaque direction de mesure (sous-étape1); et
- déterminer, à partir de l'analyse spectrale, les raies spectrales correspondant respectivement au signal utile et au signal parasite pour chaque direction de mesure (sous-étape2).

9. Dispositif d'anémométrie laser Doppler à balayage continu du faisceau selon un cône (CO) d'angle au sommet (AS) supérieur à un seuil (S2), adapté pour mettre en oeuvre le procédé selon l'une des revendications précédentes.

10. Dispositif selon la revendication 9, comprenant un hublot (HB) en forme de dôme centré sur le sommet du cône (CO) de balayage.

11. Dispositif selon la revendication 9 ou 10, comprenant un premier prisme tournant (PR1) comprenant une face agissant en réflexion interne totale.

12. Dispositif selon la revendication 11, comprenant un premier contre-prisme d'équilibrage (CPR1) du premier prisme tournant (PR1) par rapport à son axe de rotation (AX).

13. Dispositif selon la revendication 11 ou 12, comprenant un deuxième prisme (PR2) tournant disposé en amont du premier prisme tournant (PR1), en considérant le sens d'émission du signal optique laser.

14. Aéronef (HL) muni d'un dispositif selon l'une des revendications 9 à 13, adapté pour être monté de sorte que le cône (CO) est d'axe (AX) sensiblement vertical lorsque l'aéronef (HL) est posé au sol.

## Patentansprüche

1. Verfahren zur Bestimmung des Geschwindigkeitsvektors (*̅V̅d̅*̅) eines Drehflügel-Luftfahrzeugs (HL) in Bezug auf die Umgebungsluft, welches mit einer Laser-Doppler-Anemometrievorrichtung mit kontinuierlicher Abtastung des Strahls ausgerüstet ist, welches folgende Schritte beinhaltet:
- Messen (Schritt 1) einer Gruppe von Projektionen (*Vm*) des Geschwindigkeitsvektors (*̅V̅d̅*̅) in mindestens vier Richtungen, welche nicht koplanar sind, unter Verwendung einer Abtastung des Laserstrahls entlang eines Kegels (CO) mit einem Winkel am Scheitelpunkt (AS), welcher einen zweiten Schwellenwert (S2) überschreitet, und mit einer im Wesentlichen vertikalen Achse (AX), wenn das Luftfahrzeug (HL) am Boden ruht
- Erkennen (Schritt 2) einer eventuellen Anomalie von mindestens einem Element der Gruppe der gemessenen Projektionen (*Vm*), anhand eines Vergleichs mit einem ersten Schwellenwert (51) einer ersten Abweichung zwischen den Messungen (*Vm*) und den geplanten Messungen (*Vp*) anhand eines vorbestimmten Modells, welches von den Strahlabtastungs-Parameterwerten der Anemometrievorrichtung abhängt; und
- Reduzieren (Schritt 3) des Effekts einer erkannten Anomalie durch Invalidieren der dieser Anomalie entsprechenden Messungen, und durch Berechnen der Komponenten des Geschwindigkeitsvektors anhand der gültigen Messungen.

2. Verfahren nach Anspruch 1, welches zudem einen Schritt des Schätzens (Schritt 4) einer Konformität der gültigen Messugnen (*Vm*) mit dem Modell beinhaltet.

3. Verfahren nach Anspruch 2, bei welchem die Schätzung eine Norm der Abweichung zwischen dem aus den berücksichtigten Messungen gebildeten Vektor (*Vm*) und dem aus den entsprechenden geplanten Messungen (*Vp*) gebildeten Vektor verwendet.

4. Verfahren nach Anspruch 3, bei welchem die Norm anhand der Summe der quadratischen Abweichungen oder der Summe der absoluten Abweichungen berechnet werden kann.

5. Verfahren nach einem der vorhergehenden Ansprüche, bei welchem der zweite Schwellenwert (S2) von Betriebsparametern des Drehflügel-Luftfahrzeugs (HL) abhängt, wobei die Parameter die Spannweite der Flügel und/oder die Grenz-Fluglagen des Drehflügel-Luftfahrzeugs (HL) beinhalten.

6. Verfahren nach einem der vorhergehenden Ansprüche, bei welchem der zweite Schwellenwert (S2) größer als oder gleich 60° ist.

7. Verfahren nach einem der vorhergehenden Ansprüche, bei welchem der zweite Schwellenwert (S2) im Wesentlichen 109,4° beträgt.

8. Verfahren nach einem der vorhergehenden Ansprüche, bei welchem der Schritt des Erkennens einer Anomalie (Schritt 2) folgende Unterschritte beinhaltet:
- Durchführen einer Spektralanalyse in jeder Messrichtung (Unterschritt 1); und
- Bestimmen, anhand der Spektralanalyse, der Spektrallinien, welche jeweils dem Nutzsignal und dem Störsignal für jede der Messrichtungen (Unterschritt 2) entsprechen.

9. Laser-Doppler-Anemometrievorrichtung mit kontinuierlicher Abtastung des Strahls entlang eines Kegels (CO) mit einem Winkel am Scheitelpunkt (AS), welcher einen zweiten Schwellenwert (S2) überschreitet, welche geeignet ist, das Verfahren nach einem der vorhergehenden Ansprüche umzusetzen.

10. Vorrichtung nach Anspruch 9, welche ein Bullauge (HB) in Form eines auf den Scheitelpunkt des Abtastkegels (CO) zentrierten Doms beinhaltet.

11. Vorrichtung nach Anspruch 9 oder 10, welche ein erstes drehendes Prisma (PR1) beinhaltet, welches eine Seite beinhaltet, welches mit totaler innerer Reflexion wirkt.

12. Vorrichtung nach Anspruch 11, welche ein erstes Ausgleichs-Gegenprisma (CPR1) des ersten drehenden Prismas (PR1) in Bezug auf seine Drehachse (AX) beinhaltet.

13. Vorrichtung nach Anspruch 11 oder 12, welche ein zweites drehendes Prisma (PR2) beinhaltet, welches im vorgelagerten Bereich des ersten drehenden Prismas (PR1) angeordnet ist, wenn man die Senderichtung des optischen Lasersignals betrachtet.

14. Luftfahrzeug (HL), welches mit einer Vorrichtung nach einem der Ansprüche 9 bis 13 ausgerüstet ist, geeignet zur Montage in einer Weise, dass der Kegel (CO) eine im Wesentlichen vertikale Achse (AX) besitzt, wenn das Luftfahrzeug (HL) am Boden ruht.

## Claims

1. A method for determining the speed vector (*̅V̅d̅*̅), with respect to the surrounding air, of a rotary wing aircraft (HL) equipped with a continuous beam scanning Doppler laser anemometry device, comprising the following steps:
- measuring (Step1) a set of projections (*Vm*) of said speed vector (*̅V̅d̅*̅) in at least four non-coplanar directions, by using laser beam scanning according to a cone (CO) of apex angle (AS) greater than a second threshold (S2) and of axis (AX) substantially vertical when the aircraft (HL) is standing on the ground;
- detecting (Step2) any anomaly of at least one element from the set of measured projections (*Vm*), from a comparison with respect to a first threshold (S1), of a deviation between the measurements (*Vm*) and the measurements (*Vp*) predicted from a predetermined model depending on values of beam scanning parameters of the anemometry device; and
- reducing (Step3) the effect of a detected anomaly by invalidating measurements corresponding to said anomaly, and by computing the components of the speed vector from valid measurements.

2. The method as claimed in claim 1, further comprising a step consisting of estimating (Step4) a conformity of the valid measurements (*Vm*) with said model.

3. The method as claimed in claim 2, wherein said estimation uses a standard deviation between the vector constituted by the measurements (*Vm*) taken into account and the vector constituted by the corresponding predicted measurements (*Vp*).

4. The method as claimed in claim 3, wherein the standard may be computed by the sum of quadratic deviations or the sum of absolute deviations.

5. The method as claimed in any of the preceding claims, wherein the second threshold (S2) depends on operational parameters of the rotary wing aircraft (HL), said parameters comprising the wingspan and/or the limit attitudes of the rotary wing aircraft (HL).

6. The method as claimed in any of the preceding claims, wherein the second threshold (S2) is greater than or equal to 60°.

7. The method as claimed in any of the preceding claims, wherein the second threshold (S2) is approximately equal to 109.4°.

8. The method as claimed in any of the preceding claims, wherein said anomaly detection step (Step2) comprises the sub-steps consisting of:
- carrying out a spectral analysis in each measuring direction (sub-step 1); and
- determining, from the spectral analysis, the spectral lines corresponding to the useful signal and to the parasitic signal respectively for each measuring direction (sub-step2).

9. Doppler laser beam anemometry device for continuous beam scanning according to a cone (CO) having an apex angle (AS) greater than a threshold (S2), adapted to implement the method as claimed in any of the preceding claims.

10. The device as claimed in claim 9, comprising a dome-shaped window (HB) centered on the apex of the scanning cone (CO).

11. The device as claimed in claim 9 or 10, comprising a first rotating prism (PR1) with a total internal reflection mirror face.

12. The device as claimed in claim 11, comprising a first opposing prism (CPR1) balancing the first rotating prism (PR1) with respect to its axis of rotation (AX).

13. The device as claimed in claim 11 or 12, comprising a second rotating prism (PR2) disposed upstream of the first rotating prism (PR1), with respect to the direction of transmission of the laser optical signal.

14. Aircraft (HL) provided with a device as claimed in any of the claims 9 to 13, adapted to be mounted in such a way that the cone (CO) has a substantially vertical axis (AX) when the aircraft (HL) is standing on the ground.
